(19) Europäisches Patentamt
European Patent Office
Office européen des brevets

(11)  **EP 2 411 345 B1**

(12)  **FASCICULE DE BREVET EUROPEEN**

(45) Date de publication et mention
de la délivrance du brevet:
**05.03.2014  Bulletin 2014/10**

(51) Int Cl.:
***E04F 15/12*** *(2006.01)*    *C04B 111/62* *(2006.01)*

(21) Numéro de dépôt: **10718633.0**

(86) Numéro de dépôt international:
**PCT/FR2010/050492**

(22) Date de dépôt: **18.03.2010**

(87) Numéro de publication internationale:
**WO 2010/109116 (30.09.2010 Gazette 2010/39)**

(54)  **COMPOSITION CIMENTAIRE POUR CHAPE FLUIDE AUTONIVELANTE, ET CHAPE FLUIDE AUTONIVELANTE AINSI RÉALISÉE**

**ZEMENTZUSAMMENSETZUNG FÜR EINEN SELBSTNIVELLIERENDEN FLÜSSIGEN ESTRICH SOWIE DAMIT HERGESTELLTER SELBSTNIVELLIERENDER FLÜSSIGER ESTRICH**

**CEMENT COMPOSITION FOR A SELF-LEVELING FLUID SCREED, AND SELF-LEVELING FLUID SCREED THUS PRODUCED**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **23.03.2009  FR 0901327**

(43) Date de publication de la demande:
**01.02.2012  Bulletin 2012/05**

(73) Titulaire: **Ciments Français**
**92800 Puteaux (FR)**

(72) Inventeurs:
• **LE ROLLAND, Bruno**
**F-78250 Oinville Sur Montcient (FR)**
• **ROUX, André**
**F-78200 Mantes-La-Jolie (FR)**
• **VESPASIEN, Sylvia**
**F-77185 Lognes (FR)**

(74) Mandataire: **Le Cloirec, Claudine et al**
**Ipsilon Brema-Loyer**
**3, rue Edouard Nignon**
**44300 Nantes (FR)**

(56) Documents cités:
EP-A1- 1 197 480     EP-A1- 1 258 466
EP-A1- 1 306 356     EP-A1- 1 312 590
WO-A1-94/29232       DE-A1- 1 671 201
FR-A1- 2 825 698

• **CHEMICAL ABSTRACTS, vol. 86, no. 10, 7 mars 1977 (1977-03-07), Columbus, Ohio, US; abstract no.: 59657y, G.V.Dolzhkova et al.: "Expanding cement, containing portland cement clinker, a sulfoaluminosilicate product, and gypsum" page 296 XP184218 & SU 530 865 A1 (ALL-UNION INSTITUTE FRO DESIGN AND CIENTIFIC RESEARCH PROJECTS) 5 octobre 1976 (1976-10-05)**

Remarques:
Le dossier contient des informations techniques présentées postérieurement au dépôt de la demande et ne figurant pas dans le présent fascicule.

**Description**

La présente invention concerne le domaine des compositions cimentaires utilisées pour la réalisation de chapes fluides autonivelantes, et plus particulièrement, une composition fluide cimentaire pour chape et la chape fluide autonivelante ainsi réalisée.

Une chape fluide autonivelante est formée à partir d'une composition cimentaire à base d'un liant, d'un granulat, qui est généralement du sable, d'au moins un adjuvant fluidifiant (appelé également superplastifiant ou dispersant) et d'eau. L'adjuvant fluidifiant permet de transformer cette composition cimentaire en une pâte dont la consistance après gâchage est proche de celle de l'eau. Ceci explique le caractère autonivelant et autolissant de la composition à l'état frais.

De telles chapes sont très appréciées dans le domaine de la construction et du bâtiment pour leur grande facilité de mise en oeuvre, leur aptitude à corriger des défauts de planéité des supports et à enrober par exemple des canalisations de planchers chauffants. Elles permettent d'obtenir, sans intervention extérieure, l'étalement parfait du mélange qui s'effectue donc par gravité grâce à la composition du mélange coulé.

La mise en oeuvre de ces chapes peut être effectuée sur les chantiers selon deux voies :

- la première voie consiste à fabriquer un "premix" en station de mélange c'est-à-dire à réaliser le mélange sec de l'ensemble des constituants de la composition cimentaire : liants et adjuvants, avec les granulats, de façon à pouvoir disposer d'un mélange pulvérulent de mortier prêt à l'emploi. Il est livré sur chantier en silos mobiles ou en sacs. Ce mortier est destiné à être gâché sur site mécaniquement avec de l'eau et appliqué par pompage ;

- la seconde voie consiste à fabriquer le mortier fluide en centrale à béton et à le livrer sur chantier par camion malaxeur. Le mortier est ensuite généralement pompé sur le site de mise en oeuvre par l'intermédiaire d'une pompe.

Les différents types de chapes se distinguent principalement par la nature de leur liant.

Les liants les plus utilisés actuellement sont l'anhydrite naturelle ou synthétique (sulfate de calcium anhydre) qui conduit à la formation de gypse après hydratation, le ciment alumineux additionné ou non de sulfate de calcium qui conduit à la formation rapide d'ettringite ou le ciment Portland.

Les chapes dites "anhydrite" présentent l'inconvénient majeur d'être, après séchage, très sensibles à l'eau. Toute réhumidification de la chape par remontée de la dalle support peut être à l'origine de graves désordres dans la tenue du revêtement de sol. En outre, les chapes "anhydrite" présentent en séchant des remontées de gypse qui cristallise en surface ainsi que des remontées de laitance (ressuage se manifestant par une remontée d'eau accompagnée d'éléments fins de la formulation, tels que calcaire, gypse). La formation superficielle d'une croûte peu résistante ou de laitance pulvérulente contraint, avant toute pose de revêtement sur ladite chape, à des opérations de ponçage, brossage ou rabotage. Enfin, la vitesse de séchage d'une chape anhydrite est généralement lente. Si celle-ci peut être accélérée lors de la mise en chauffe initiale d'un plancher chauffant, en l'absence d'un système de chauffage interne, le temps de séchage nécessaire avant recouvrement est d'environ un mois.

L'utilisation de ciment alumineux, généralement additionné de sulfate de calcium, conduit à la formation d'ettringite après hydratation. La chape durcie résultante est généralement insensible à l'eau mais dans ce cas, le temps de maintien de l'ouvrabilité de la composition cimentaire est assez court (inférieurs à 1h30) rendant son utilisation peu judicieuse dans le cas d'un transport par camion toupie de mortier fluide sur chantier à partir d'une centrale à béton. Le ciment alumineux est alors plutôt utilisé sous forme de "premix" prêt à l'emploi et conditionné en sacs. Il est gâché sur chantier juste avant de réaliser la chape.

L'utilisation de ciment Portland seul est généralement préférable pour réaliser une chape fluide autonivelante car il permet l'obtention de temps d'ouvrabilité suffisant pour transporter et mettre en oeuvre la composition cimentaire sur chantier. Par contre, sans l'ajout d'adjuvants spécifiques tels que ceux décrits par exemple dans le brevet EP-B1-1.197.480, l'hydratation du ciment Portland conduit inévitablement au phénomène de retrait à l'origine de fissurations potentielles, de relèvement des bords de la chape, ou gauchissement et de la formation consécutive de macrofissurations sous l'effet de son propre poids. Cette pathologie appelé aussi "curling" est liée au différentiel de retrait entre le fond et la surface de la chape, différentiel causé par un gradient d'humidité s'installant lors du séchage.

EP 1312590 décrit une chape autonivelante obtenue à partir d'une composition comprenant une proportion importante en clinker sulfoalumineux et une très faible proportion de ciment Portland, en indiquant que le retrait est plus important pour les chapes en ciment Portland que les chapes à base de ciment sulfoalumineux.

Par ailleurs, FR 2825698 décrit une plaque à base de liant cimentaire comprenant du ciment Portland, du clinker sulfoalumineux et une source de sulfate de calcium, avec un faible rapport eau/liant compris entre 0,2 et 0,5 et mentionne qu'au-delà de cette valeur, les performances mécaniques chutent de manière vertigineuse.

Le brevet EP 1306356 du même demandeur décrit un liant cimentaire comprenant du ciment Portland, du clinker sulfoalumineux et du sulfate de calcium, qui ne permet pas de réaliser une chape fluide autonivelante présentant une ouvrabilité suffisante, ni un faible retrait, ni une résistance mécanique à la compression à 24 heures au moins égale à 1 MPa.

Un premier but de l'invention est donc de proposer une composition cimentaire de chape fluide autonivelante présentant une ouvrabilité supérieure à environ 1h30, notamment pour autoriser sa préparation dans une centrale à béton, présentant un durcissement rapide, se traduisant par une résistance mécanique à la compression à 24h au moins égale à 1 MPa environ, afin d'autoriser la poursuite des travaux sur le chantier dès le lendemain en permettant au minimum une circulation piétonne.

Pour lutter contre les variations dimensionnelles lors des phases d'hydratation et de séchage, ont été mis au point des ciments dits expansifs. Ces ciments, selon le ACI (American Concrete Institute) Committee 223- *Standard practice for the use of Shrinkage-Compensating Concrete (ACI 223-98),* sont des ciments qui, lorsqu'ils sont mélangés avec de l'eau, produisent une pâte cimentaire qui, après prise, dans des conditions de cure humide, tend à augmenter de volume. Le gonflement produit est capable de contrebalancer une partie ou la totalité du retrait observé lors d'une exposition de la pâte cimentaire à un environnement à hygrométrie réduite et donc d'obtenir des compositions cimentaires ayant des variations dimensionnelles réduites. Le ciment expansif est ainsi décrit comme ciment à retrait compensé dans la mesure où l'expansion résiduelle dans le matériau reste limitée voire nulle.

On connaît par ailleurs les compositions cimentaires à retrait compensé qui sont conçues de sorte à augmenter de volume après la prise et pendant la phase de durcissement au jeune âge. Cette expansion, lorsqu'elle est restreinte ou gênée (par des armatures ou simplement un support ou coffrage dans le cas d'une dalle) provoque une contrainte de compression dans le matériau. Lors du séchage ultérieur, le retrait, au lieu de provoquer une contrainte de traction qui conduirait à de la fissuration, "relâche" les déformations de gonflement causées par l'expansion initiale.

La chaux vive ou la magnésie sont connues comme agents expansifs permettant de compenser le retrait. On trouve aussi comme liants expansifs, les ciments expansifs conduisant à la formation contrôlée d'ettringite dans les premiers jours qui suivent la mise en place du béton qui permettent d'obtenir un effet compensateur du retrait, Les trois types de ciment expansif reconnus par les normes ACI 223R6-93 et ASTM C 845-90 sont les suivants :

- type K : contient du $C_4A_3\$$, du $C\$$ et de la chaux non combinée (chaux vive)

- type M : contient des aluminates de calcium sous la forme CA et $C_{12}A_7$

- type S : contient une plus grande quantité de $C_3A$ qu'un ciment Portland

Dans un ciment expansif de type K, le plus fréquemment rencontré notamment aux Etats-Unis, la formation d'ettringite à partir de $C_4A_3\$$ est représentée par l'équation suivante :

$$C_4A_3\$ + 8C\$H_2 + 6CH + 74H \rightarrow 3C_6A\$_3H_{32}$$

L'expansion de la pâte de ciment résultant de la formation d'ettringite commence dès que l'eau a été ajoutée mais seule l'expansion empêchée est bénéfique, ce qui n'est pas le cas tant que le béton ou mortier est à l'état plastique. Par ailleurs, une expansion retardée dans un béton peut être dramatique lorsque par exemple celui-ci subit une attaque extérieure par les sulfates. Il est donc important que la formation d'ettringite cesse après plusieurs jours. Lors de la mise en oeuvre de ce type de béton, il est nécessaire d'assurer un mûrissement à l'eau, après coulage, condition impérative pour tirer pleinement bénéfice de l'utilisation d'un tel ciment. Ceci limite l'utilisation de tels ciments à des compositions cimentaires qui présentent une certaine consistance. Par conséquent, jusqu'à maintenant le cas des compositions cimentaires fluides autonivelantes n'entrait pas dans le domaine d'application des compositions cimentaires à retrait compensé.

Par ailleurs, la maniabilité, ou ouvrabilité, d'une composition cimentaire confectionnée avec un ciment expansif de type K est moins bonne et la perte d'affaissement est supérieure à celle observée avec un ciment Portland traditionnel. Compte tenu de la présence de chaux vive dans le ciment expansif de type K, la cinétique de formation de l'ettringite est rapide et conduit dès les premiers instants à immobiliser une partie de l'eau de gâchage. Ceci se traduit par une perte significative d'ouvrabilité au cours du temps.

Un deuxième but de la présente invention est de proposer une composition cimentaire de chape fluide autonivelante à retrait compensé dont le temps d'ouvrabilité puisse être contrôlé sur une durée suffisante pour permettre la mise en oeuvre de la dite composition. Typiquement, ce temps doit facilement atteindre 3 heures dans le cas d'une livraison de la composition cimentaire par camion malaxeur depuis la centrale à béton (lieu de la fabrication) jusqu'au site de mise en oeuvre (lieu de coulage de la composition cimentaire fluide autonivelante).

Un troisième but de la présente invention est aussi de proposer une composition cimentaire qui ne subit pas de perte de fluidité au cours du temps : c'est-à-dire présentant un caractère autonivelant depuis le moment de sa fabrication jusqu'au moment de sa mise en oeuvre sur le chantier pour permettre le coulage de la chape.

A cet effet, la composition cimentaire de chape fluide autonivelante selon l'invention, formée d'un mélange d'un liant cimentaire, d'adjuvants comprenant au moins un adjuvant fluidifiant, de granulats et d'eau, est caractérisée en ce que le liant cimentaire comprend :

- de 70 % à 85 % en poids de ciment Portland,

- de 7 % à 18 % en poids de clinker sulfoalumineux renfermant une teneur en sulfo-aluminate de calcium C4 A3 $ comprise entre 50 et 70 % en poids,

- de 6 % à 14 % en poids de sulfate de calcium,

avec un rapport molaire sulfate de calcium C$/sulfoaluminate de calcium $C_4A_3\$$ compris entre 5 et 7,
et en ce que le rapport pondéral eau/liant est compris entre 0,60 et 0,90.

De préférence, la composition cimentaire comprend :

- de 77 % à 85 % en poids de ciment Portland,

- de 7 % à 18 % en poids de clinker sulfoalumineux,

- de 6 % à 14 % en poids de sulfate de calcium.

Les essais réalisés ont montré de manière surprenante que la condition essentielle pour minimiser le retrait est de respecter le rapport molaire sus-mentionné entre la teneur totale en sulfate de calcium, y compris celui présent dans le clinker sulfoalumineux, et la teneur en sulfoaluminate de calcium présent dans le clinker sulfoalumineux.

Par ciment Portland, il faut comprendre un ciment normalisé selon la norme européenne EN 197-1 (de type I et II). De manière préférée, le ciment Portland présente une surface spécifique (Blaine) comprise entre 3000 et 6000 $cm^2$/g.

Par clinker sulfoalumineux, il faut comprendre tout matériau résultant de la cuisson à une température comprise entre 900 °C et 1450 °C (température de clinkérisation) de mélanges contenant au moins une source de chaux (par exemple les calcaires qui ont une teneur en CaO variant entre 50 % et 60 %), au moins une source d'alumine (par exemple les bauxites, les alumines calcinées ou autre sous-produit de fabrication contenant de l'alumine) et au moins une source de sulfate (gypses, gypse chimiques, anhydrite naturelle ou synthétique, plâtre, cendres sulfocalciques). Le clinker sulfoalumineux faisant partie du liant de la composition cimentaire selon la présente invention renferme une teneur en sulfo-aluminate de calcium $4CaO.3Al_2O_3,SO_3$ (aussi noté $C_4A_3\$$) comprise entre 50 et 70 % en poids.

Avantageusement, le clinker sulfoalumineux utilisé dans le cadre de l'invention renferme une teneur en chaux libre inférieure ou égale à 1 % en poids, de préférence inférieure à 0,6 % en poids. Une teneur supérieure à 1 % en chaux libre peut être à l'origine de problèmes de perte d'ouvrabilité rapide de la composition cimentaire.

Le sulfate de calcium peut être choisi parmi l'anhydrite, le gypse ou l'hémihydrate de calcium.

Dans cette composition, le liant est additionné d'eau selon un rapport pondéral eau/liant compris avantageusement entre 0,60 et 0,80, de préférence entre 0,70 et 0,80.

De manière préférée, le granulat est du sable, avantageusement de granulométrie inférieure ou égale à 4 mm.

La composition cimentaire selon l'invention peut renfermer un ou plusieurs adjuvants choisis parmi : un retardateur de prise, tel qu'un acide polycarboxyllque, un accélérateur de durcissement, un agent de cohésion et de stabilité, un agent anti-mousse et un superplastifiant. L'accélérateur de durcissement est avantageusement un sel d'alcalin, de préférence choisi parmi le carbonate de lithium, le carbonate de sodium, ou un mélange de ces derniers.

Ladite composition présente de préférence un temps d'ouvrabilité (mesuré selon la norme ASTM C230/C230 M-03) compris entre 1h30 et 3 heures, à une température comprise entre 5 °C et 30 °C.

La présente invention concerne également l'utilisation de la composition cimentaire décrite ci-dessus pour la réalisation de chape fluide autonivelante.

La chape autonivelante obtenue à partir de la composition décrite ci-dessus présente des performances supérieures aux chapes de l'art antérieur et est en particulier caractérisée en ce qu'elle présente une résistance mécanique à la compression à 24 heures au moins égale à 1 MPa, un retrait à 7 jours, mesuré sous une hygrométrie relative de 50 %, inférieur à 500 $\mu$m/m et une valeur de gonflement endogène mesurée à 7 jours inférieure à 1000 $\mu$m/m. Le respect de ces valeurs permet d'obtenir une chape dite de "bonne stabilité dimensionnelle" et donc à retrait limité, dans la mesure où il a été constaté qu'aucune fissure n'apparaît jusqu'à 28 jours après sa mise en oeuvre.

Le tableau 1 suivant permet de comparer et "quantifie" les performances observées pour la chape fluide autonivelante selon l'invention par rapport aux performances des chapes de l'art antérieur.

Tableau 1

| PROPRIETE | CHAPE ANHYDRITE | CHAPE CIMENT PORTLAND | CHAPE CIMENT ALUMINEUX | CHAPE CIMENT SULFO-ALUMINEUX | CHAPE SELON INVENTION |
|---|---|---|---|---|---|
| Résistances mécaniques élevées à 1j. | + | - | + | + | + |
| Long temps de maintien ouvrabilité | + | + | - | - | + |
| Stabilité dimensionnelle sous hygrométrie réduite (H.R. =50%) | + | - | + | + | + |
| Stabilité dimensionnelle en milieu humide | - | + | - | - | + |
| Vitesse de séchage élevée | - | + | + | + | + |
| Absence de ponçaqe | - | + | + | + | + |
| NOMBRE DE "+" | 3 | 4 | 4 | 4 | 6 |

D'autres caractéristiques et avantages de l'invention ressortiront de la description qui va suivre de différents modes de réalisation donnés à titre d'exemples non limitatifs et présentés en références aux figures annexées, dans lesquelles :

Les figures 1A, 1B et 1C schématisent la mesure de l'étalement de la composition cimentaire selon la norme ASTM.

La figure 2 présente le "curlingmètre", dispositif pour la mesure des variations dimensionnelles d'une chape.

La figure 3 est un graphique montrant les variations dimensionnelles dans le temps d'une chape de l'art antérieur, et

Les figures 4 et 5 sont des graphiques montrant les variations dimensionnelles dans le temps de chapes conformes à la présente invention.

**Exemples :**

**1/ Préparation de la composition cimentaire en laboratoire**

Deux protocoles de malaxage en laboratoire sont utilisés selon que la composition cimentaire est destinée à être utilisée sous forme de premix prêt à l'emploi ou sous forme de mortier à fabriquer en centrale à béton.
Dans le premier cas, la composition cimentaire sèche comprenant le liant cimentaire, les adjuvants et le sable est préalablement homogénéisée dans un mélangeur de type turbula pendant 5 minutes avant d'être gâchée dans un malaxeur de laboratoire.
Dans le second cas, la composition cimentaire sans sable est préalablement homogénéisée dans un mélangeur de type turbula pendant 5 minutes. C'est au moment du malaxage que le sable est préalablement humidifié et que le superplastifiant liquide est ajouté.

**2/ Paramètres testés**

Les paramètres des mortiers fluides testés sont les suivants :

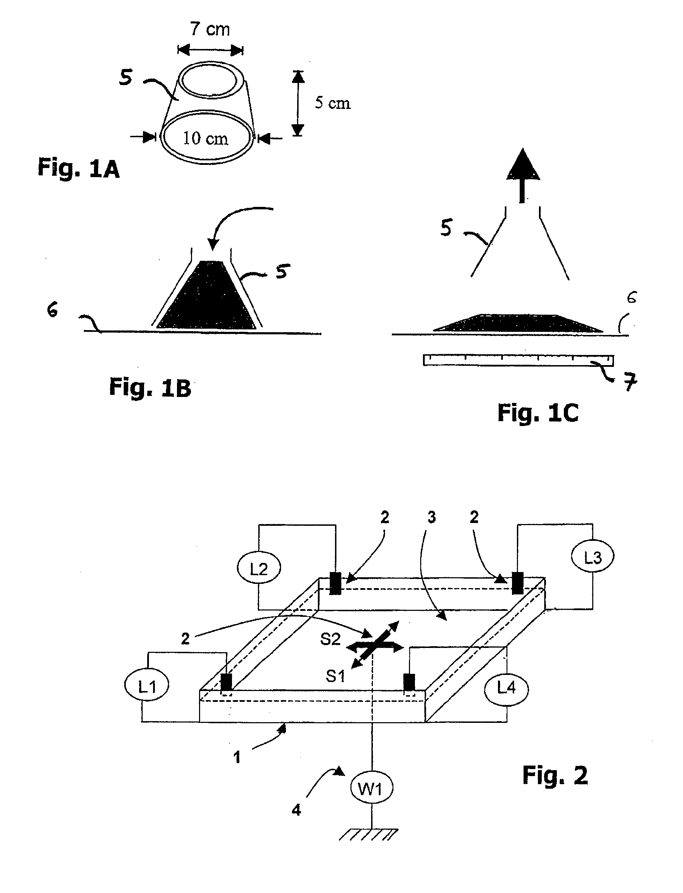

- Mesure de l'étalement : Le degré de fluidité du mortier testé est évalué par la mesure de l'étalement obtenu après soulèvement manuel d'un cône rempli de la composition cimentaire. Les dimensions du cône 5 utilisé, schématisé à la figure 1A, sont Øsup. x h x Øinf. = 7 x 5 x 10 cm$^3$ (cône ASTM). Le cône 5 est rempli de la composition cimentaire à tester (figure 1B), puis est soulevé le plus verticalement possible (figure 1C). La valeur de l'étalement sur la surface 6, correspondant à la moyenne de trois mesures de diamètre effectuées à l'aide d'un pied à coulisse 7, doit être comprise entre 220 et 300 mm pour que la composition cimentaire soit considérée comme fluide et autonivelante. Dans les exemples selon la présente invention on retiendra la valeur minimum de 230 mm, de préférence 250 mm.

- Evolution de l'étalement au cours du temps : Des mesures d'étalement sur la composition cimentaire autonivelante sont effectués jusqu'à une échéance de 3 heures après le début du malaxage. Entre chaque échéance de mesure, la composition cimentaire testée est laissée au repos et recouverte d'un linge humide. Avant chaque mesure de l'étalement, la composition cimentaire est remalaxée pendant 15 secondes.

- Relèvement des bords sous dessication ("curling") : Le relèvement des bords ou "curling" est mesuré avec un dispositif de laboratoire conforme à la figure 2. La composition cimentaire est coulée selon la flèche 3 dans un moule 1 de forme carrée de 33 cm de côté et 3 cm de hauteur. Des inserts métalliques 2 sont maintenus par un gabarit pendant les 24 premières heures. Au bout de 24 heures, deux capteurs de déplacement mesurant le retrait (S1 et S2) et quatre capteurs de déplacement (L1, L2, L3 et L4) mesurant le relevé des bords sont fixés sur ces inserts. Un peson 4 permet de suivre également l'évolution de la masse depuis le moment où la composition cimentaire a été coulée dans le moule. Toutes les données relatives aux valeurs de déplacement des capteurs ainsi que la masse sont enregistrées en continu au cours du temps avec une fréquence qu'il est possible de choisir (typiquement une mesure toutes les heures). Le dispositif est placé dans un caisson climatique à 20 °C et 50 % d'humidité relative (H.R.). Un tel dispositif permet de reproduire à l'échelle du laboratoire le comportement d'une chape et d'en mesurer le curling, le retrait et l'évolution de la masse dans des conditions sévères de séchage.

- Mesures de retrait/gonflement : les mesures de retrait et de gonflement sont effectuées sur éprouvettes de mortier durci. Après confection de la composition cimentaire selon le protocole de gâchage décrit ci-dessus, celle-ci est introduite dans des moules métalliques de dimensions 4 x 4 x 16 cm$^3$. Les moules sont conservés pendant 24 heures en enceinte climatique à 20 °C dans des conditions d'humidité relative (H.R.) supérieures à 95 %. Au bout de 24 heures, les éprouvettes sont démoulées et placées dans les différents environnements testés : à 20 °C et 50 % d'humidité relative, à 20 °C dans l'eau, à 20 °C en conditions endogènes (éprouvettes enveloppées dans l'aluminium). La première mesure de retrait a lieu à 24h. L'évolution des dimensions des éprouvettes est mesurée à l'aide d'un comparateur jusqu'à une échéance d'au moins 28 jours dans les différents environnements testés. Les valeurs positives de "retrait" correspondent à un gonflement, les valeurs négatives à une diminution de la dimension des éprouvettes (retrait effectif).

- Mesures de temps de prise : les mesures de temps de prise sont effectuées à l'aide de l'aiguille de Vicat directement sur la composition cimentaire étudiée, comprenant le sable. A la différence de ce qui est réalisé sur pâte pure selon la norme EN 196-3, les temps de début de prise sont réalisés ici en utilisant un poids de 700 g au lieu de 300 g (appliqué sur la tête de mesure de l'enfoncement). Par ailleurs, compte tenu du caractère autonivelant de la composition cimentaire, celle-ci n'est pas plongée dans l'eau au moment de la mesure. Outre ces deux modifications, les temps de début et de fin de prise sont mesurés de la même façon que dans la norme EN 196-3 à l'aide de l'aiguille de Vicat.

- Mesures des performances mécaniques : les performances mécaniques (résistances en compression Rc et en flexion Rf) sont évaluées sur éprouvettes durcies de la composition cimentaire étudiée aux échéances de 24 heures, 7 jours et 28 jours. Selon le cas, plusieurs modes de conservation ont été réalisés : à 20 °C dans l'eau, à 20 °C dans l'air (humidité relative de l'ordre de 65 %), dans les conditions ambiantes de réalisation d'essais industriels. Dans tous les cas, les éprouvettes sont démoulées au bout de 24 heures avant cure dans le mode de conservation choisi.

- constituants du liant cimentaire :

Le ciment Portland utilisé est un ciment Portland de type CEM I ou CEM II.

Le clinker sulfoalumineux utilisé dans les exemples ci-après présente une teneur en $C_4A_3\$$ comprise entre 55 et 65 % en poids, une teneur en sulfate de calcium C$\$$ comprise entre 7 et 11 % en poids, une teneur en $C_2S$ comprise entre 17 et 22 % en poids, et une teneur en chaux libre voisine de 0,3 % en poids.

Le sulfate de calcium ajouté est ici de l'anhydrite.

- adjuvants : les différentes compositions cimentaires présentées ci-après peuvent renfermer les adjuvants ou additifs suivants, utilisés classiquement pour les ciments alumineux ou sulfoalumineux :

  retardateur de prise : acides polycarboxyliques ou sels d'acides polycarboxyliques, par exemple acide citrique sous forme monohydratée,

  accélérateur de durcissement : sels d'alcalins, plus particulièrement les sels de lithium, tel que le carbonate de lithium $Li_2CO_3$, ou le carbonate de sodium $Na_2CO_3$.

  Cimfluid P2 : superplastifiant en poudre de type polycarboxylate (commercialisé par la société Axim),

  Collaxim P5 (Axim) : agent de cohésion et de stabilité, permettant d"éviter les phénomènes de ségrégation et de ressuage,

  Désaérocim P1 (Axim) : agent anti-mousse permettant d'éviter d'entrainer de l'air dans la composition cimentaire.

Dans tous les exemples qui suivent, les teneurs des différents constituants sont exprimées en parties en poids, et les pourcentages des constituants du liant se rapportent au pourcentage en poids par rapport au poids total du liant.

## EXEMPLE 1

Cet exemple 1 montre que si la teneur en ciment Portland est supérieure à 85 % (chape comparative 1 et chape comparative 2) alors les performances mécaniques de la chape ne permettent pas une circulation piétonne sur la chape car la résistance à la compression est trop faible Rc (1 jour) < 1MPa. Toutes les formulations présentées dans le tableau 2 étaient optimisées de façon à obtenir un temps de maintien de l'ouvrabilité d'au moins 3 heures.

Tableau 2

|  | CHAPE 1 Comparative | CHAPE 2 Comparative | CHAPE 3 |
|---|---|---|---|
| CEM II/B-LL 32,5 R | 427,5 | 415 | 380 |
| CLINKER SULFOALUMINEUX | 11,25 (2,5 %) | 14,8 (3,3 %) | 41 (9,1 %) |
| ANHYDRITE | 11,25 (2,5 %) | 20,2 (4,5 %) | 29 (6,5 %) |
| $Li_2CO_3$ | 0,3 | 0,3 | 0,3 |
| Cimfluid P2 | 1,5 | 2,5 | 3 |
| Sable 0 / 0,5 mm | 828 | 828 | 828 |
| Sable 0,5 / 1,25 mm | 359 | 359 | 359 |
| Sable 1,25 / 4 mm | 193 | 193 | 193 |
| Acide citrique | 3 | 2,5 | 3 |
| Collaxim P5 | 0,08 | 0,2 | 0,2 |
| Désaérocim P1 | 2 | 1 | 1 |
| Eau (rapport pondéral eau/liant) | 330 (0,73) | 330 (0,73) | 330 (0,73) |
| étalement t 0 | 264 | 261 | 261 |
| étalement (t = 30 min) | 267 | 258 | 264 |
| étalement (t = 60 min) | 268 | 257 | 268 |
| étalement (t = 90 min) | 261 | 252 | 257 |
| étalement (t = 120 min) | 262 | 237 | 255 |
| étalement (t = 150 min) | 254 | 252 | 256 |
| étalement (t = 180 min) | 249 | 231 | 257 |

(suite)

|  | CHAPE 1 Comparative | CHAPE 2 Comparative | CHAPE 3 |
|---|---|---|---|
| **TENEUR EN CIMENT PORTLAND** | **95 %** | **92,2 %** | **84,4 %** |
| C\$/C$_4$A$_3$\$ (molaire) | 7,30 | 9,67 | 5,40 |
| Rf (1 j.) (MPa) | 0,2 ± 0,1 | 0,2 ± 0,1 | 1,9 ± 0,1 |
| Rc (1 j.) (MPa) | 0,5 ± 0,1 | 0,5 ± 0,1 | 5,6 ± 0,1 |
| Rf = résistance à la flexion<br>Rc = résistance à la compression | | | |

**EXEMPLE 2**

Dans cet exemple 2, toutes les formulations présentées dans le tableau 3 étaient également optimisées de façon à obtenir un temps de maintien de l'ouvrabilité d'au moins 3 heures.

Tableau 3

|  | CHAPE 4 comparative | CHAPE 5 comparative | CHAPE 6 comparative | CHAPE 3 |
|---|---|---|---|---|
| CEM II/B-LL 32,5 R | 380 | 380 | 400 | 380 |
| CLINKER SULFOALUMINEUX | 29 (6,5 %) | 35 (7,8 %) | 25 (5,55 %) | 41 (9,1 %) |
| ANHYDRITE | 41 (9,1 %) | 35 (7,8 %) | 25 (5,55 %) | 29 (6,5 %) |
| Li$_2$CO$_3$ | 0,3 | 0,3 | 0,3 | 0,3 |
| Cimfluid P2 | 2,5 | 3 | 3 | 3 |
| Sable 0 / 0,5 mm | 828 | 828 | 828 | 828 |
| Sable 0,5 / 1,25 mm | 359 | 359 | 359 | 359 |
| Sable 1,25 / 4 mm | 193 | 193 | 193 | 193 |
| Acide citrique | 2,5 | 3 | 2,5 | 3 |
| Collaxim P5 | 0,2 | 0,2 | 0,2 | 0,2 |
| Désaérocim P1 | 1 | 1 | 1 | 1 |
| Eau (rapport eau/liant) | 330 (0,73) | 330 (0,73) | 330 (0,73) | 330 (0,73) |
| étalement t 0 | 269 | 260 | 261 | 261 |
| étalement (t = 30 min) | 265 | 264 | 256 | 264 |
| étalement (t = 60 min) | 263 | 266 | 255 | 268 |
| étalement (t = 90 min) | 263 | 270 | 246 | 257 |
| étalement (t = 120 min) | 252 | 262 | 242 | 255 |
| étalement (t = 150 min) | 252 | 252 | 245 | 256 |
| étalement (t = 180 min) | 244 | 256 | 243 | 257 |
| TENEUR EN CIMENT PORTLAND | 84,4 % | 84,4 % | 88,9 % | 84,4 % |
| **C\$/C$_4$A$_3$\$ (molaire)** | **9,98** | **7,30** | **7,30** | **5,40** |
| Rf (1 jour) (MPa) | 0,5 ± 0,1 | 1,9 ± 0,2 | 0,5 ± 0,1 | 1,9 ± 0,1 |
| Rc (1 jour) (MPa) | 1,2 ± 0,1 | 5,0 ± 0,1 | 1,0 ± 0,1 | 5,6 ± 0,1 |

(suite)

| | CHAPE 4 comparative | CHAPE 5 comparative | CHAPE 6 comparative | CHAPE 3 |
|---|---|---|---|---|
| Gonflement dans l'eau (7 jours) (G en $\mu$m/m) | + 6277 | + 2267 | + 4713 | + 347 |
| Retrait 50% H.R. (7 jours) (R en $\mu$m/m) | - | -130 | + 630 | - 413 |
| Amplitude dimensionnelle (G - R en $\mu$m/m) | - | + 2397 | + 4083 | + 760 |

Les résultats de ce tableau 3 mettent en évidence l'influence du rapport molaire C\$/C$_4$A$_3$\$ sur la stabilité dimensionnelle du mortier, à teneur en ciment Portland identique. Un rapport égal à 5,4 permet d'optimiser l'amplitude dimensionnelle alors que si ce rapport est supérieur à 7,3, un gonflement dans l'eau (c'est-à-dire sous HR = 100 %) trop important est observé. Dans le cas de la chape 5, les valeurs de retrait mesurées sont les plus faibles et pourraient nous permettre de conclure que cette formulation est la plus performante. Ceci d'autant plus que, lors du coulage d'une telle chape, il est peu vraisemblable qu'elle soit immergée dans l'eau et donc susceptible de provoquer un gonflement rédhibitoire (+2267 $\mu$m/m). Cependant, le retrait endogène mesuré sur une telle chape correspond en fait à un fort gonflement comme le montre le tableau 4 ci-dessous. Si l'on admet qu'un comportement de type endogène puisse se produire en fond de chape, cette valeur élevée est rédhibitoire.

Tableau 4

| | CHAPE 5 BIS comparative | CHAPE 3 BIS |
|---|---|---|
| CEM II/B-LL 32,5 R | 380 | 380 |
| CLINKER SULFOALUMINEUX | 35 (7,8 %) | 41 (9,1 %) |
| ANHYDRITE | 35 (7,8 %) | 29 (6,5 %) |
| Li$_2$CO$_3$ | 0,3 | 0,3 |
| Cimfluid P2 | 3 | 3 |
| Sable 0 / 0,5 mm | 828 | 828 |
| Sable 0,5 / 1,25 mm | 359 | 359 |
| Sable 1,25 / 4 mm | 193 | 193 |
| Acide citrique | 3 | 3 |
| Collaxim P5 | 0,2 | 0,2 |
| Désaérocim P1 | 1 | 1 |
| Eau (rapport pondéral eau/liant) | 330 (0,73) | 330 (0,73) |
| TENEUR EN CIMENT PORTLAND | 84,4% | 84,4% |
| **C\$/C$_4$A$_3$\$ (molaire)** | **7,30** | **5,40** |
| Retrait endogène (7 jours) (RE en $\mu$m/m) | + 3173 | + 430 |

Les chapes 5 BIS et 3 BIS présentées dans le tableau 4 sont des chapes de compositions correspondant respectivement aux compositions des chapes 5 et 3 réalisées en laboratoire, qui ont été coulées sur site industriel sur une surface de 15 m$^2$ et une hauteur comprise entre 4 et 8 cm. Dès 7 jours, des fissurations sont observées sur la chape 5 BIS qui n'est pourtant pas immergée dans l'eau, alors que la chape 3 BIS ne présente pas ce type de défaut. Une valeur limite de retrait endogène permet d'éviter tout problème de fissuration. Cette valeur limite de retrait qui est en fait du gonflement a été fixée à +1000$\mu$m/m à 7 jours.

**EXEMPLE 3**

Dans cet exemple 3, les deux formulations présentées dans le tableau 5 ci-dessous sont également optimisées de façon à obtenir un temps de maintien de l'ouvrabilité d'au moins 3 heures.

Tableau 5

|  | CHAPE 7 comparative | CHAPE 8 | CHAPE 3 |
|---|---|---|---|
| CEM II/B-LL 32,5 R (Vicat) | 360 | 360 | 380 |
| CLINKER SULFOALUMINEUX | 65,3 (14,5 %) | 46,5 (10,3 %) | 41 (9,1 %) |
| ANHYDRITE | 24,7 (5,5 %) | 43,5 (9,7 %) | 29 (6,5 %) |
| $Li_2CO_3$ | 0,3 | 0,3 | 0,3 |
| Cimfluid P2 | 1,5 | 2,5 | 3 |
| Sable 0 / 0,5 mm | 828 | 828 | 828 |
| Sable 0,5 / 1,25 mm | 359 | 359 | 359 |
| Sable 1,25 / 4 mm | 193 | 193 | 193 |
| Acide citrique | 3,5 | 3 | 3 |
| Collaxim P5 | 0,08 | 0,2 | 0,2 |
| Désaérocim P1 | 2 | 1 | 1 |
| Eau (rapport pondéral eau/liant) | 330 (0,73) | 330 (0,73) | 330 (0,73) |
| étalement t 0 | 269 | 266 | 261 |
| étalement (t = 30 min) | 273 | 272 | 264 |
| étalement (t = 60 min) | 266 | 265 | 268 |
| étalement (t = 90 min) | 262 | 257 | 257 |
| étalement (t = 120 min) | 264 | 251 | 255 |
| étalement (t = 150 min) | 256 | 248 | 256 |
| étalement (t = 180 min) | 245 | 243 | 257 |
| Rf (1 jour) (MPa) | 2,3 ± 0,2 | 2,4 ± 0,1 | 1,9 ± 0,1 |
| Rc (1 jour) (MPa) | 6,1 ± 0,1 | 7,6 ± 0,1 | 5,6 ± 0,1 |
| TENEUR EN CIMENT PORTLAND | 80% | 80% | 84,4% |
| **C\$/ $C_4A_3$\$ (molaire)** | **3,27** | **6,88** | **5,40** |
| Gonflement (7 jours) (G en $\mu$m/m) | + 50 | + 1320 | + 347 |
| Retrait (7 jours) (R en $\mu$m/m) | -705 | - 333 | - 413 |
| Amplitude dimensionnelle (7 jours) (G - R en $\mu$m/m) | + 755 | + 1653 | + 760 |

Le paramètre primordial étant le retrait, les chapes 8 et 3 conviennent pour l'application, contrairement à la chape 7 qui présente un retrait trop important. Les valeurs de retrait endogène (correspondant en fait à un gonflement) inférieures à 1000 $\mu$m/m permettent de produire une chape fluide ciment autonivelante pendant 3 heures qui est ensuite exempte de fissuration dans le temps (voir tableau 6 ci-dessous). Les chapes 8 BIS et 3 Bis correspondent aux compositions cimentaires des chapes 8 et 3 du tableau 5, coulées sur site industriel sur une surface de 15 m$^2$ à l'aide d'un malaxeur/pompe.

Tableau 6

|  | CHAPE 8 BIS | CHAPE 3 BIS |
|---|---|---|
| CEM II/B-LL 32,5 R | 360 | 380 |

(suite)

| | CHAPE 8 BIS | CHAPE 3 BIS |
|---|---|---|
| CLINKER SULFOALUMINEUX | 46,5 (10,3 %) | 41 (9,1 %) |
| ANHYDRITE | 43,5 (9,7 %) | 29 (6,5 %) |
| $Li_2CO_3$ | 0,3 | 0,3 |
| Cimfluid P2 | 2,5 | 3 |
| Sable 0 / 0,5 mm | 828 | 828 |
| Sable 0,5 / 1,25 mm | 359 | 359 |
| Sable 1,25 / 4 mm | 193 | 193 |
| Acide citrique | 3 | 3 |
| Collaxim P5 | 0,2 | 0,2 |
| Désaérocim P1 | 1 | 1 |
| Eau (rapport pondéral eau/liant) | 330 (0,73) | 330 (0,73) |
| TENEUR EN CIMENT PORTLAND | 80% | 84,4% |
| **C\$/C$_4$A$_3$\$ (molaire)** | **6,88** | **5,40** |
| Retrait endogène (7 jours) (RE en $\mu$m/m) | + 927 | + 430 |

Compte tenu de l'ensemble des résultats ci-dessus, il est démontré que de manière surprenante, le rapport molaire C\$/C$_4$A$_3$\$ doit se situer entre 5 et 7 pour permettre la production d'une chape fluide autonivelante pendant 3 heures, exempte de fissuration, conséquence d'un retrait et d'un gonflement maîtrisés.

## EXEMPLE 4

L'exemple 4 montre qu'à des teneurs en ciment Portland aussi faibles que 70 % en poids dans le liant cimentaire, il est possible d'obtenir une chape ayant une bonne stabilité dimensionnelle.

Tableau 7

| | CHAPE 9 | CHAPE 10 |
|---|---|---|
| CEM II/B-LL 32,5 R | 315 | 315 |
| CLINKER SULFOALUMINEUX | 81 (18 %) | 72(16%) |
| ANHYDRITE | 54 (12 %) | 63 (14%) |
| $Li_2CO_3$ | 0,3 | 0,3 |
| Cimfluid P2 | 2,5 | 2,5 |
| Sable 0 / 0,5 mm | 828 | 828 |
| Sable 0,5 / 1,25 mm | 359 | 359 |
| Sable 1,25 / 4 mm | 193 | 193 |
| Acide citrique | 3,5 | 3,5 |
| Collaxim P5 | 0,2 | 0,2 |
| Désaérocim P1 | 1 | 1 |
| Eau (rapport pondéral eau/liant) | 330 (0,73) | 330 (0,73) |
| TENEUR EN CIMENT PORTLAND | 70% | 70% |
| **C\$/C$_4$A$_3$\$ (molaire)** | **5,14** | **6,49** |
| Retrait (7 jours) (R en $\mu$m/m) | - 320 | - 210 |

(suite)

| | CHAPE 9 | CHAPE 10 |
|---|---|---|
| Retrait endogène (7 jours) (RE en $\mu$m/m) | + 520 | + 982 |

Cependant, une teneur plus faible en ciment Portland contraint à l'utilisation de quantités de ciment sulfoalumineux plus élevées. Ce qui conduit à un coût plus élevé. Par ailleurs, une augmentation de la teneur en clinker sulfoalumineux rend plus difficile le contrôle du temps de maintien de l'ouvrabilité de 3 heures pendant lequel le mortier doit rester autonivelant.

**EXEMPLE 5**

L'exemple 5 montre que le ciment Portland peut être choisi indifféremment parmi les ciments Portland de type CEM I et CEM II.

Tableau 8

| MATERIAUX | CHAPE 11 | CHAPE 12 | CHAPE 13 |
|---|---|---|---|
| CEM I 52,5 N | 380 g | - | - |
| CEM II/A-LL 42,5 N | - | 380 g | - |
| CEM II/B-M (S-LL) 32,5 R | - | - | 380 g |
| Clinker sulfoalumineux | 41g | 41 g | 41 g |
| Anhydrite SMA | 29 g | 29 g | 29 g |
| $Li_2CO_3$ | 0,3 g | 0,3 g | 0,3 g |
| Acide citrique | 2,5 g | 3 g | 2,5 g |
| Collaxim P5 | 0,2 g | 0,2 g | 0,2 g |
| Désaérocim P1 | 1 g | 1 g | 1 g |
| Sable 0/4 mm | 1380 g | - | - |
| Sable 0/2 mm R | - | 1380 g | - |
| Sable 0/0,5 mm | - | - | 828 g |
| Sable 0,5/1,25 mm | - | - | 359 g |
| Sable 1,25/4 mm | - | - | 193 g |
| Cimfluid 2002 | 9,5 g | - | - |
| Optima 100 | - | 7,5 g | - |
| Cimfluid P2 | - | - | 2,5 g |
| Eau (rapport eau/liant) | 354 g (0,79) | 325 g (0,72) | 330 g (0,73) |
| Teneur en ciment Portland | 84,4 % | 84,4 % | 84,4 % |
| C\$/$C_4A_3$\$ (molaire) | 5,40 | 5,40 | 5,40 |
| Etalement t 0 | 268 | 267 | 263 |
| Etalement (t = 30 min) | 269 | 275 | 260 |
| Etalement (t = 60 min) | 266 | 272 | 259 |
| Etalement (t = 90 min) | 258 | 266 | 254 |
| Etalement (t = 120 min) | 255 | 258 | - |
| Etalement (t = 1.50 min) | 253 | 253 | - |
| Etalement (t = 180 min) | 249 | 249 | - |

(suite)

| MATERIAUX | CHAPE 11 | CHAPE 12 | CHAPE 13 |
|---|---|---|---|
| Rc (1 jour) (MPa) | 4,1 | 3,8 | 3,9 |
| Retrait endogène (7 jours) (RE en $\mu$m/m) | - 2,0 | + 53,0 | - 2,7 |
| Retrait 50 % H.R. (7 jours) (R en $\mu$m/m) | - 39,7 | - 126,7 | - 45,0 |

Comme le montrent les résultats du tableau 8 ci-dessus, les valeurs de retrait (qu'il soit endogène ou de séchage sous une hygrométrie de 50 %) mesurées sur les 3 chapes sont très faibles.

**EXEMPLE 6**

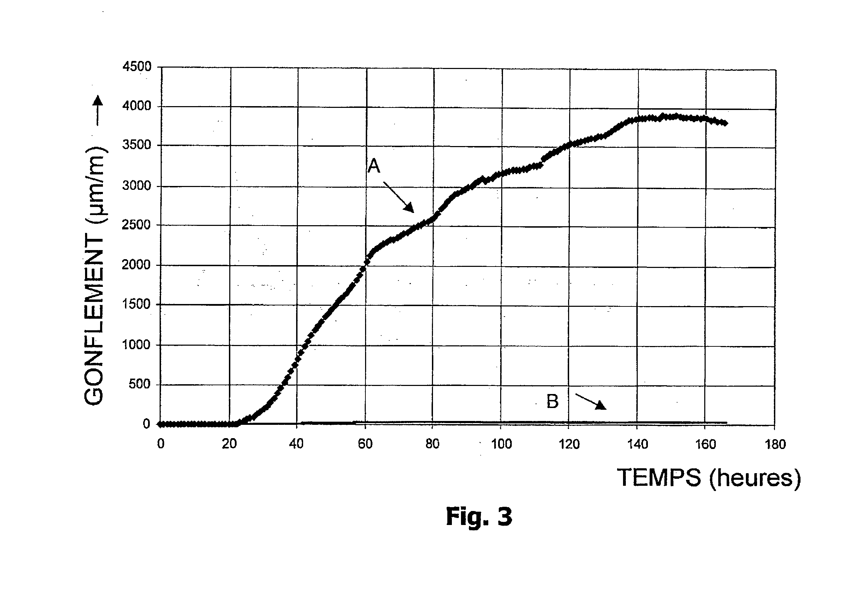

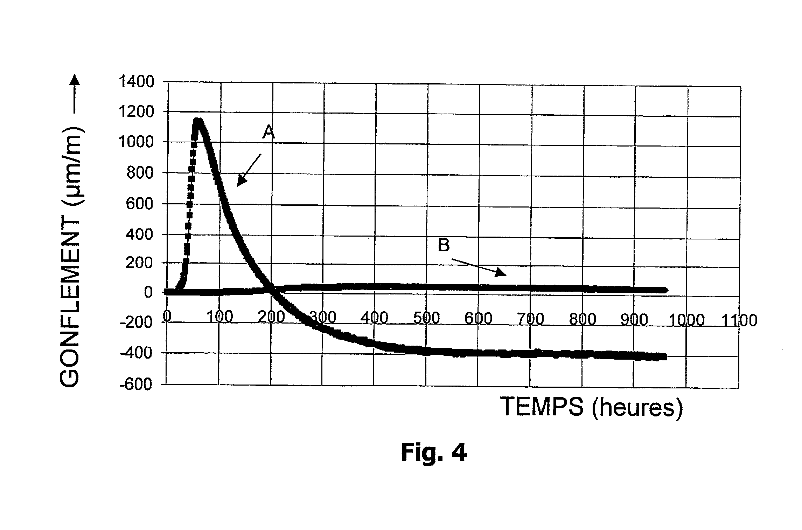

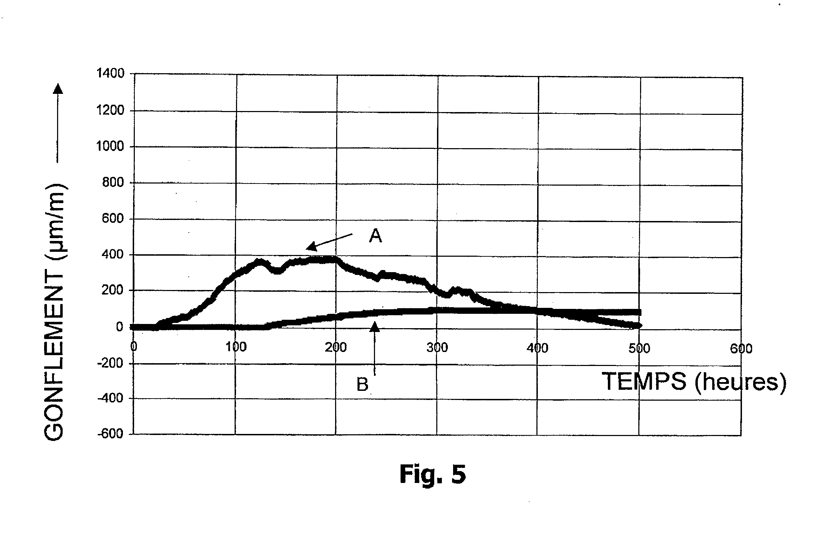

L'exemple 6 rassemble les résultats de mesures de variations dimensionnelles A et de relevé de bords B en fonction du temps effectués en continu à l'aide du "curlingmètre" sur trois chapes de compositions différentes : à savoir, la chape comparative 5 et les chapes 8 et 12 entrant dans le cadre de l'invention, présentées respectivement sur les figures annexées 3, 4 et 5.
On remarque sur la figure 3 que la chape comparative 5 présente un gonflement trop important et conduit à l'apparition de fissures par gonflement.
Parmi les deux chapes selon l'invention, il apparaît (voir figures 4 et 5) que la chape 12 est particulièrement performante: la compensation du retrait est obtenue par un gonflement préalable qui compense exactement le retrait au bout de 500 heures (environ 21 jours). La chape reste en gonflement contrairement à la chape 8.

**Revendications**

1.   Composition cimentaire de chape fluide autonivelante formée d'un mélange d'un liant cimentaire, d'adjuvants comprenant au moins un adjuvant fluidifiant, de granulats et d'eau **caractérisée en ce que** le liant cimentaire comprend

- de 70 % à 85 % en poids de ciment Portland,
- de 7 % à 18 % en poids de clinker sulfoalumineux renfermant une teneur en sulfo-aluminate de calcium C4 A3 $ comprise entre 50 et 70 % en poids,
- de 6 % à 14 % en poids de sulfate de calcium,

avec un rapport molaire entre la teneur totale en sulfate de calcium C$ et la teneur en sulfoaluminate de calcium $C_4A_3$$ présent dans le clinker sulfoalumineux compris entre 5 et 7,
et **en ce que** le rapport pondéral eau/liant est compris entre 0,60 et 0,90.

2.   Composition cimentaire selon la revendication 1, **caractérisée en ce que** le liant cimentaire comprend

- de 77 % à 85 % en poids de ciment Portland,
- de 7 % à 18 % en poids de clinker sulfoalumineux,
- de 6 % à 14 % en poids de sulfate de calcium.

3.   Composition cimentaire selon l'une des revendications 1 ou 2, **caractérisée en ce que** le rapport pondéral eau/ liant est compris entre 0,60 et 0,80.

4.   Composition cimentaire selon l'une quelconque des revendications précédentes, **caractérisée en ce que** clinker sulfoalumineux renferme une teneur en chaux libre inférieure ou égale à 1 % en poids, de préférence inférieure à 0,6 % en poids.

5.   Composition cimentaire selon l'une quelconque des revendications précédentes, **caractérisée en ce que** le sulfate de calcium est choisi parmi l'anhydrite, le gypse ou l'hémihydrate de calcium.

6.   Composition cimentaire selon l'une quelconque des revendications précédentes, **caractérisée en ce que** le granulat est du sable de granulométrie inférieure ou égale à 4 mm.

**7.** Composition cimentaire selon l'une quelconque des revendications précédentes, **caractérisée en ce qu'**elle renferme un ou plusieurs adjuvants choisis parmi : un retardateur de prise, tel qu'un acide polycarboxylique, un accélérateur de durcissement, un agent de cohésion et de stabilité, un agent anti-mousse et un superplastifiant.

**8.** Composition cimentaire selon l'une quelconque des revendications précédentes, **caractérisée en ce que** l'accélérateur de durcissement est un sel d'alcalin, de préférence choisi parmi le carbonate de lithium, le carbonate de sodium, ou un mélange de ces derniers.

**9.** Composition cimentaire selon l'une quelconque des revendications précédentes, **caractérisée en ce qu'**elle présente un temps d'ouvrabilité (selon la norme ASTM C230/C230 M-03) compris entre 1h30 et 3 heures, à une température comprise entre 5 °C et 30 °C.

**10.** Chape autonivelante obtenue à partir de la composition cimentaire selon l'une quelconque des revendications précédentes, **caractérisée en ce qu'**elle présente une résistance mécanique à la compression à 24 heures au moins égale à 1 MPa, un retrait à 7 jours, mesuré sous une hygrométrie relative de 50 %, inférieur à 500 $\mu$m/m et une valeur de gonflement endogène mesurée à 7 jours inférieure à 1000 $\mu$m/m.


**Patentansprüche**

**1.** Zementzusammensetzung für einen selbstnivellierenden flüssigen Estrich, die von einem Gemisch eines Zementbindemittels, Zusatzstoffen, die mindestens einen verflüssigenden Zusatzstoff umfassen, Granulaten und Wasser gebildet wird, **dadurch gekennzeichnet, dass** das Zementbindemittel umfasst:

    - 70 bis 85 Gew.-% Portlandzement,
    - 7 bis 18 Gew.-% Sulfoaluminatklinker mit einem Gehalt an Kalzium-Sulfoaluminat C4 A3 $ zwischen 50 und 70 Gew.-% inklusive,
    - 6 bis 14 Gew.-% Kalziumsulfat,

mit einem molaren Verhältnis zwischen dem Gesamtgehalt an Kalziumsulfat C$ und dem Gehalt an Kalzium-Sulfoaluminat $C_4A_3$\$, der in dem Sulfoaluminatklinker vorhanden ist, zwischen 5 und 7 inklusive, und dadurch, dass das Gewichtsverhältnis Wasser/Bindemittel zwischen 0,60 und 0,90 inklusive ist.

**2.** Zementzusammensetzung nach Anspruch 1, **dadurch gekennzeichnet, dass** das Zementbindemittel umfasst:

    - 77 bis 85 Gew.-% Portlandzement,
    - 7 bis 18 Gew.-% Sulfoaluminatklinker,
    - 6 bis 14 Gew.-% Kalziumsulfat.

**3.** Zementzusammensetzung nach einem der Ansprüche 1 oder 2, **dadurch gekennzeichnet**, das das Gewichtsverhältnis Wasser/Bindemittel zwischen 0,60 und 0,80 inklusive ist.

**4.** Zementzusammensetzung nach einem der vorangehenden Ansprüche, **dadurch gekennzeichnet, dass** der Sulfoaluminatklinker einen Gehalt an freiem Kalk von unter oder gleich 1 Gew.-%, vorzugsweise von unter 0,6 Gew.-%, einschließt.

**5.** Zementzusammensetzung nach einem der vorangehenden Ansprüche, **dadurch gekennzeichnet, dass** das Kalziumsulfat aus dem Anhydrit, dem Gips oder dem Kalziumhemihydrat ausgewählt ist.

**6.** Zementzusammensetzung nach einem der vorangehenden Ansprüche, **dadurch gekennzeichnet, dass** das Granulat Sand mit einer Korngröße von kleiner oder gleich 4 mm ist.

**7.** Zementzusammensetzung nach einem der vorangehenden Ansprüche, **dadurch gekennzeichnet, dass** sie einen oder mehrere Zusatzstoffe einschließt, die aus einen Abbindeverzögerer wie einer Polycarbonsäure, einem Aushärtebeschleuniger, einem Kohäsions- und Stabilitätsmittel, einem Anti-Schaum-Mittel und einem Hochleistungsverflüssiger ausgewählt sind.

**8.** Zementzusammensetzung nach einem der vorangehenden Ansprüche, **dadurch gekennzeichnet, dass** der Aushärtebeschleuniger ein Alkalisalz ist, das vorzugsweise aus dem Lithiumcarbonat, dem Natriumcarbonat oder einem Gemisch derselben ausgewählt ist.

9. Zementzusammensetzung nach einem der vorangehenden Ansprüche, **dadurch gekennzeichnet, dass** sie eine Verarbeitungszeit (gemäß der Norm ASTM C230/C230 M-03) zwischen 1 Stunde 30 Minuten und 3 Stunden inklusive bei einer Temperatur zwischen 5 °C und 30 °C inklusive hat.

10. Selbstnivellierender Estrich, der aus der Zementzusammensetzung nach einem der vorangehenden Ansprüche gewonnen wird, **dadurch gekennzeichnet, dass** er eine mechanische Kompressionsfestigkeit nach 24 Stunden von mindestens gleich 1 MPa, einen Schwund nach 7 Tagen, gemessen bei einer relativen Luftfeuchte von 50 %, von unter 500 $\mu$m/m und einen endogenen Blähwert, gemessen nach 7 Tagen, unter von 1.000 $\mu$m/m hat.

**Claims**

1. A self-levelling, flowing screed cement composition formed of a mixture of cement binder, adjuvants comprising at least one fluidifying adjuvant, aggregate and water, **characterized in that** the cement binder comprises:

   - 70 % to 85 % by weight of Portland cement;
   - 7 % to 18 % by weight of sulphoaluminous clinker having a C4 A3$ calcium sulpho-aluminate content of between 50 and 70 % by weight;
   - 6 % to 14 % by weight of calcium sulphate the molar ratio between the total C$ calcium sulphate content and the $C_4A_3$\$ calcium sulphoaluminate content of the sulphoaluminous clinker being between 5 and 7;
   and **in that** the water/binder weight ratio is between 0.60 and 0.90.

2. The cement composition according to claim 1, **characterized in that** the cement binder comprises:

   - 77 % to 85 % by weight of Portland cement;
   - 7 % to 18 % by weight of sulphoaluminous clinker;
   - 6 % to 14 % by weight of calcium sulphate.

3. The cement composition according to one of claims 1 or 2, **characterized in that** the water/binder weight ratio is between 0.60 and 0.80.

4. The cement composition according to any of the preceding claims, **characterized in that** the sulphoaluminous clinker has a free lime content equal to or lower than 1 weight %, preferably lower than 0.6 weight %.

5. The cement composition according to any of the preceding claims, **characterized in that** the calcium sulphate is chosen from among anhydrite, gypsum or calcium hemihydrate.

6. The cement composition according to any of the preceding claims, **characterized in that** the aggregate is sand of particle size equal to or smaller than 4 mm.

7. The cement composition according to any of the preceding claims, **characterized in that** it contains one or more adjuvants chosen from among: a setting retarder such as a polycarboxylic acid, a hardening accelerator, a cohesion and stability agent, an anti-foam agent and a superplasticiser.

8. The cement composition according to any of the preceding claims, **characterized in that** the hardening accelerator is an alkaline salt, preferably chosen from among lithium carbonate, sodium carbonate or a mixture thereof.

9. The cement composition according to any of the preceding claims, **characterized in that** it has a workability time (as per standard ASTM C230/C230 M-03) of between 1h30 and 3 hours, at a temperature of between 5°C and 30°C.

10. A self-levelling screed obtained with a cement composition according to any of the preceding claims, **characterized in that** it has a mechanical compressive strength at 24 hours of at least 1 MPa, shrinkage at 7 days measured under 50 % relative hygrometry of less than 500 $\mu$m/m and endogenous swell value measured at 7 days of less than 1000 $\mu$m/m.

7 cm

5

5 cm

10 cm

**Fig. 1A**

6

5

**Fig. 1B**

5

6

7

**Fig. 1C**

L2

2

3

2

L3

2

S2

S1

L1

L4

1

4

W1

**Fig. 2**

**Fig. 3**

**Fig. 4**

**Fig. 5**

**RÉFÉRENCES CITÉES DANS LA DESCRIPTION**

**Documents brevets cités dans la description**

- EP 1197480 B1
- EP 1312590 A
- FR 2825698
- EP 1306356 A